# EUROPEAN PATENT APPLICATION

(11) **EP 3 886 224 A1**
(43) Date of publication of application: **29.09.2021**
(21) Application number: 19886526.3
(22) Date of filing: 11.09.2019
(51) Int. Cl.: H01M 8/04007, H01M 8/04029, H01M 8/249

(54) **FUEL CELL SYSTEM COMPRISING PLURALITY OF FUEL CELLS**

(30) Priority: 23.11.2018 KR 20180146205
(71) Applicant: Doosan Corporation, Seoul 04563 (KR)
(72) Inventor: AHN, Chul Soo, Hwaseong-si, Gyeonggi-do 18608 (KR); KIM, Heung Gu, Hwaseong-si, Gyeonggi-do 18608 (KR)
(74) Representative: Stöckeler, Ferdinand
(86) International application number: PCT/KR2019/011844
(87) International publication number: WO 2020/105855

(57) **Abstract**

In the present invention, by designing the internal structure of the heat storage tank in an empty structure, unlike the existing one in which multiple fuel cell heat exchangers were connected to one heat storage tank by designing a flow path inside the heat storage tank, the increase in volume of the heat storage tank can be prevented, so that the manufacturing cost of the heat storage tank can be reduced.

In addition, conventionally, the heat storage tank for multiple fuel cell heat exchangers was installed according to the number of the fuel cell heat exchangers, but in the present invention, a single heat storage tank can be connected to multiple fuel cell heat exchangers, thereby achieving space saving.

## Description

### [Technical Field]

The present invention relates to a fuel cell system having multiple fuel cells, and more particularly, to a fuel cell system capable of efficiently managing the heat generated from multiple fuel cells.

### [Background Art]

A fuel cell inevitably generates heat during an operation process, and needs to properly cool the heat because such heat affects the operation of the fuel cell. Typically, a fuel cell heat exchanger using external coolant is used, and a heat storage tank which stores the heat of the coolant and utilizes it separately is used as many as the number of fuel cells.

The heat storage tank is typically composed of a heat storage tank which stores working fluid, and heat exchange coils which are configured to be installed in the heat storage tank and in which the coolant that has cooled the fuel cell is circulated. That is, the coolant of the fuel cell circulates the inside of the heat exchange coils immersed in the working fluid stored in the heat storage tank and is cooled, and the heat transferred to the working fluid can be used as hot water for heating.

Each of the heat exchange coils is formed as a single passage having a hot water inlet and a circulation water inlet for heat exchange on one side, and a hot water outlet and a circulation water outlet for heat exchange on the other side, and heats the hot water and circulation water for heat exchange flowing in a low temperature state and supplies them. Meanwhile, a polymer electrolyte fuel cell heat exchanger has a temperature accumulated in the heat storage tank of about 60°C to 80°C, and is mainly operated at 65°C or less.

When such a heat storage tank is used together with multiple fuel cell heat exchangers, there is a problem that the volume occupied by the coil in the heat storage tank is increased, so that it is inevitable that the volume of the heat storage tank is increased. Therefore, in general, when multiple fuel cell heat exchangers are operated, multiple heat storage tanks are used, which causes the entire system to be complicated.

### [Detailed Description of the Invention]

### [Technical Problem]

The present invention is devised to solve the conventional problems as described above, and the object of the invention is to provide a fuel cell system capable of simplifying the overall system configuration without increasing the volume even if multiple fuel cells are included.

### [Solution to Problem]

According to one aspect of the present invention for solving the technical problems above, a fuel cell system includes multiple fuel cells; a fuel cell heat exchanger that is provided for each of the fuel cells, and exchanges heat between coolant cooling the fuel cell and system water; a heat storage tank that stores the system water; a heat exchanger for hot water supply that supplies heat of the system water in the heat storage tank to low-temperature water introduced from an outside; and a heat exchanger for heat dissipation that is disposed between the heat storage tank and any one of the fuel cell heat exchangers. The heat generated in the fuel cell is supplied to the system water, and the heat supplied to the system water is selectively transferred to the low-temperature water through the heat exchanger for hot water supply or radiated to an outside through the heat exchanger for heat dissipation.

Here, a control valve that is disposed between each of the fuel cell heat exchangers and the heat storage tank, and controls the supply of the system water to the fuel cell heat exchanger may be further included. The control valve may selectively supply the system water to the fuel cell heat exchanger depending on a temperature of the fuel cell.

Here, the system water recovered from the fuel cell heat exchanger may flow into an upper portion of the heat storage tank.

Here, if there is a request for hot water supply from a user, the system water may be supplied to the heat exchanger for hot water supply in preference to the heat exchanger for heat dissipation.

Here, the system water supplied to the heat exchanger for heat dissipation may be discharged from a lower portion of the heat storage tank.

Here, the heat exchanger for heat dissipation may be fluidly connected to a radiator for dissipating heat into an atmosphere.

Here, a hot water discharge pipe for discharging the system water in the heat storage tank may be provided on an upper portion of the heat storage tank.

Here, a control valve may be provided in the hot water discharge pipe, and the hot water discharge pipe may be controlled to be opened if a temperature of the system water in the heat storage tank is higher than a set temperature.

Here, a fluid supply pipe for replenishing the system water may be provided at a lower portion of the heat storage tank.

Here, the low-temperature water heated by the heat exchanger for hot water supply may be supplied to a user as hot water.

Here, the heat exchanger for heat dissipation may be disposed immediately preceding the fuel cell heat exchanger based on a flow direction of the system water.

Here, a pump for circulating the system water may be further included. The pump may operate and circulate the system water if a temperature of the system water in the heat storage tank falls below a set minimum temperature in a state in which an operation of the fuel cell is stopped.

### [Advantageous Effects of Invention]

According to one aspect of the present invention having the above configuration, multiple fuel cells can be efficiently and independently cooled using one heat storage tank. Further, the size increasing of the heat storage tank can be minimized because heat exchange coils are not disposed inside the heat storage tank.

### [Brief Description of Drawings]

FIG. 1 is a front view showing a heat storage tank according to one embodiment of the present invention.
FIG. 2 is a left side view showing the heat storage tank of FIG. 1.
FIG. 3 is a right side view showing the heat storage tank of FIG. 1.
FIG, 4 is a rear view showing the heat storage tank of FIG. 1.
FIG. 5 is a plan view showing the heat storage tank of FIG. 1.
FIG. 6 is a bottom view showing the heat storage tank of FIG. 1.
FIG. 7 is a configuration view of a fuel cell heat exchanger formed with the heat storage tank of FIG. 1.

### [Embodiment of Invention]

Hereinafter, the embodiments of the fuel cell system according to the present invention will be described in detail with reference to the accompanying drawings.

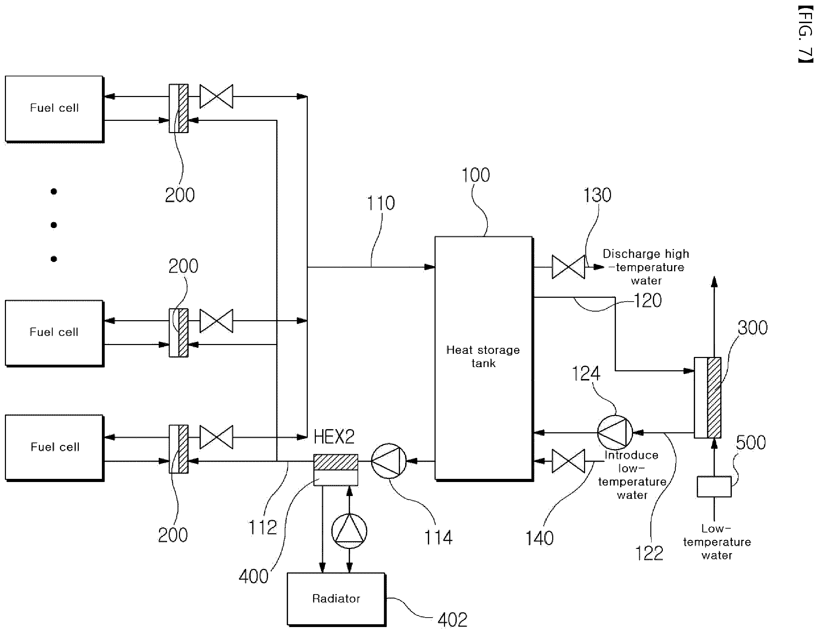

Referring to FIG. 7, a heat storage tank 100 is a device for storing the waste heat generated from a fuel cell heat exchanger 200 and utilizing the stored waste heat at a time desired by a user. Unlike conventional heat storage tanks, the heat storage tank 100 of the present invention does not have heat exchange coils therein, but has a configuration in which the coolant for fuel cells and the system water stored in the heat storage tank 100 are exchanged with each other in the fuel cell heat exchanger 200 disposed outside the heat storage tank 100.

Accordingly, the volume increase of the heat storage tank 100 due to the internal flow path of the heat storage tank 100 in connecting to several fuel cell heat exchangers 200 can be prevented because the flow path is not installed therein. In addition, cost reduction can be achieved by preventing an increase in the volume of the heat storage tank 100.

In more detail, when connecting the existing heat storage tank to the fuel cell heat exchanger 200, a flow path was formed in the heat storage tank in the form of a coil or the like. Thus, if multiple fuel cell heat exchangers 200 are connected to one heat storage tank, as many flow channels as the number of the fuel cell heat exchangers 200 are formed inside the heat storage tank, the volume increase of the heat storage tank is inevitable due to the flow channels. Accordingly, the manufacturing cost of the heat storage tank is risen, and there is a concern that the heat exchange efficiency in the heat storage tank may decrease due to close contact of the flow paths inside the heat storage tank.

However, by designing the internal structure of the heat storage tank 100 to be an empty structure, an increase in the volume of the heat storage tank 100 due to the connection of the multiple fuel cell heat exchangers 200 can be avoided because a flow path is not formed inside the heat storage tank 100. In addition, manufacturing cost can be reduced by manufacturing the heat storage tank 100 for connecting the multiple fuel cell heat exchangers 200 by avoiding the increase in volume.

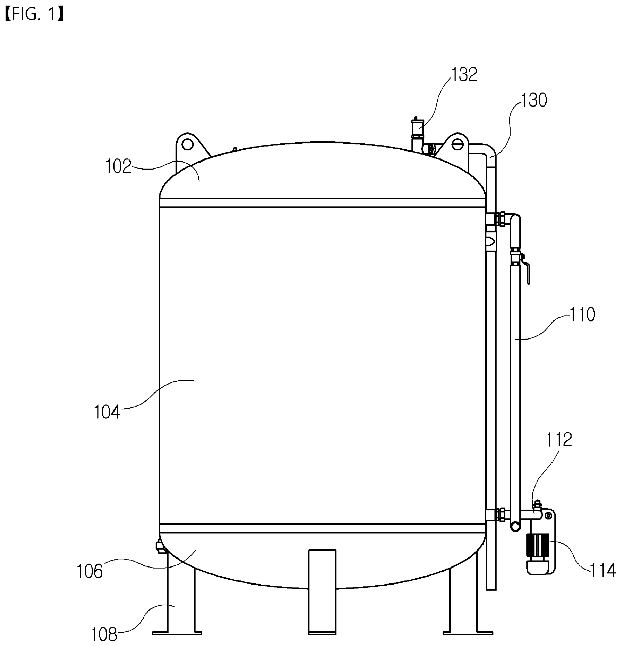

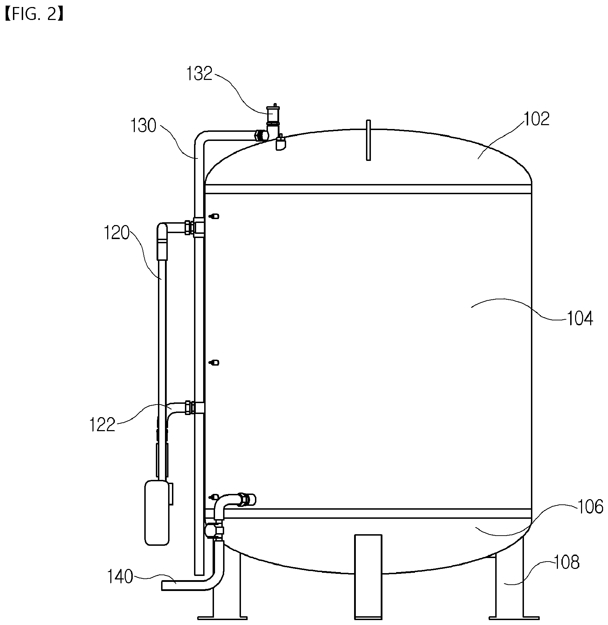

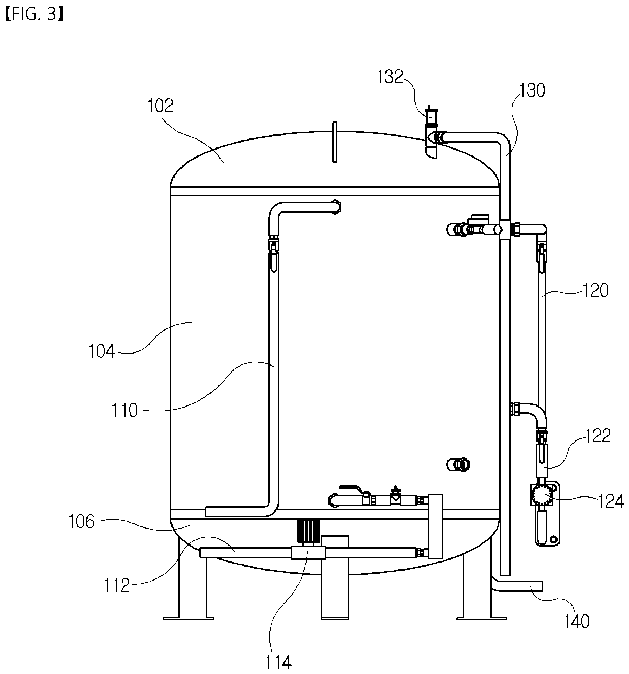

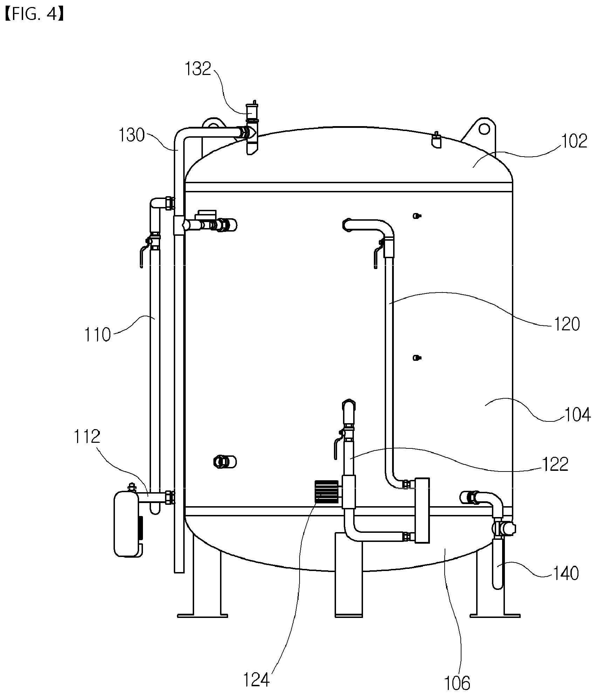

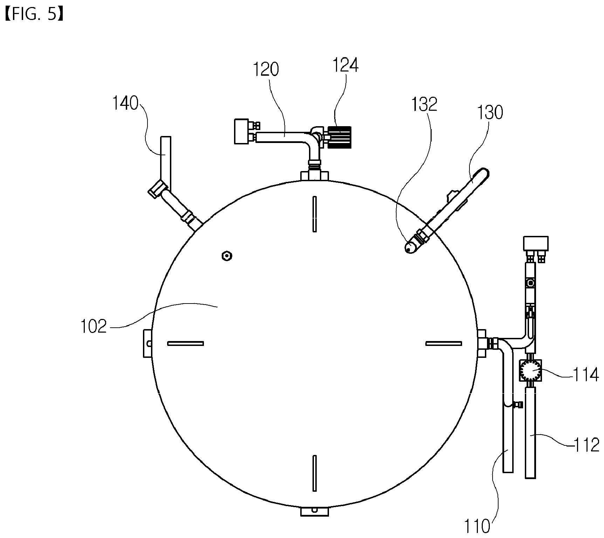

Referring to FIGS. 1 to 6, the heat storage tank 100 is composed of an upper cap 102, a body part 104, and a lower cap 106, and may optionally include a support 108 in some cases.

The upper cap 102 is mounted on the body part 104, and, in general, a portion to be mounted on the body part 104 may have a flat shape and a portion not to be mounted on the body part 104 may have a round shape. The manner of being mounted on the body part 104 may be various, and may be fused for a solid bond. The lower cap 106 may be generally manufactured in the same shape as the upper cap 102, and may be mounted on the body part 104 so as to be symmetrical with the upper cap 102 based on the body part 104.

The support 108 is a device for supporting the heat storage tank 100 and is generally mounted on the lower cap 106 of the heat storage tank 100. Since the support 108 only needs to have a function for supporting the heat storage tank 100, there is no limitation on its shape and number. In one embodiment of the present invention shown in FIG. 1, four supports 108 are coupled to the vicinity of the outer side of the upper cap 102, and the support 108 has a general beam shape. In addition, the portion of the support 108 in contact with a ground has a larger area for stable support of the heat storage tank 100.

In addition, in a case in which a drain hole 150 of the heat storage tank 100 is moved to the side instead of the bottom, the support 108 does not need to be mounted, so that the heat storage tank 100 without the support 108 may be possible.

A system water inlet pipe 110 is a path through which a fluid that has absorbed the waste heat of the fuel cell heat exchanger 200 flows into the heat storage tank 100, and a high-temperature fluid flows through the path. A system water outlet pipe 112 is a path through which a fluid from which waste heat has escaped discharges from the heat storage tank 100 flows out, and a low-temperature fluid flows through the path.

Although the position at which the system water inlet pipe 110 and the system water outlet pipe 112 are connected to the heat storage tank 100 is not determined, in general, the system water inlet pipe 110 is connected to the upper portion of the heat storage tank 100 and the system water outlet pipe 112 is connected to the lower portion of the heat storage tank 100. This takes into account the difference in density resulting from the temperature difference in which a high-temperature part is located at the upper portion and a low-temperature part is located at the lower portion.

A system water transfer pump 114 is installed in the system water outlet pipe 112 near the heat storage tank 100 to circulate the system water discharged from the heat storage tank 100 to the fuel cell heat exchanger 200 and the heat storage tank 100.

Referring back to FIGS. 1 to 7, a system water recovery pipe 122 for hot water supply is a path through which the circulation water for heat exchange flows from a heat exchanger 300 for hot water supply to the heat storage tank 100, and a low-temperature fluid flows through the path. A system water supply pipe 120 for hot water is a path through which the circulation water for heat exchange, whose temperature has risen due to the waste heat stored in the heat storage tank 100, flows out of the heat storage tank 100, and a high-temperature fluid flows through the path.

Like the connection location of the system water inlet pipe 110 and the system water outlet pipe 112 described above, the position where the system water recovery pipe 122 for hot water supply and the system water supply pipe 120 for hot water are also connected to the heat storage tank 100 is not determined. In general, the system water supply pipe 120 for hot water is connected to the upper portion of the heat storage tank 100 and the system water recovery pipe 122 for hot water supply is connected to the lower portion of the heat storage tank 100 in consideration of the difference in density due to the temperature difference.

A system water circulation pump 124 for hot water is generally installed in the system water recovery pipe 122 for hot water supply near the heat storage tank 100 and circulates the circulation water for heat exchange in the heat exchanger 300 for hot water supply.

A hot water discharge pipe 130 is installed in the heat storage tank 100 in order to control water level or temperature in the heat storage tank 100 in a case where more than necessary fluid is supplied to the heat storage tank 100 from the system water inlet pipe 110, the system water recovery pipe 122 for hot water supply, and a fluid supply pipe 140 to be described later, or in a case where the temperature of the system water in the heat storage tank 100 rises excessively. Although not shown in the drawing, a water level sensor for adjusting the water level is installed at the vicinity of the area where the upper cap 102 and the body part 104 of the heat storage tank 100 are joined, and the middle and bottom of the heat storage tank 100. Through the operation of the water level sensor, when the fluid in the heat storage tank 100 exists above a certain level, the fluid in the heat storage tank 100 automatically flows out through the hot water discharge pipe 130.

An air outlet pipe 132 is installed so that the air existing in the heat storage tank 100 is smoothly discharged as the fluid is supplied in the heat storage tank 100. The air outlet pipe 132 is not necessarily installed in the heat storage tank 100, but is generally installed for the stable operation of the heat storage tank 100.

The position that the air outlet pipe 132 is installed is generally located on the upper cap 102 of the heat storage tank 100 such that air is discharged while preventing the fluid in the heat storage tank 100 from leaking out. According to the embodiment of the present invention shown in FIG. 1, the air outlet pipe 132 is connected to a portion where the passage of the flow path is bent in the hot water discharge pipe 130 near the upper cap 102, and the air outlet pipe 132 and the flow path of the hot water discharge pipe 130 are bent to form a substantially right angle with the pipe of the portion that proceeds to the outside of the heat storage tank 100.

The fluid supply pipe 140 is a path for supplying a fluid capable of storing the waste heat of system water in the heat storage tank 100. Since the fluid supplied from the fluid supply pipe 140 is a low temperature, it is generally connected to the lower portion of the heat storage tank 100.

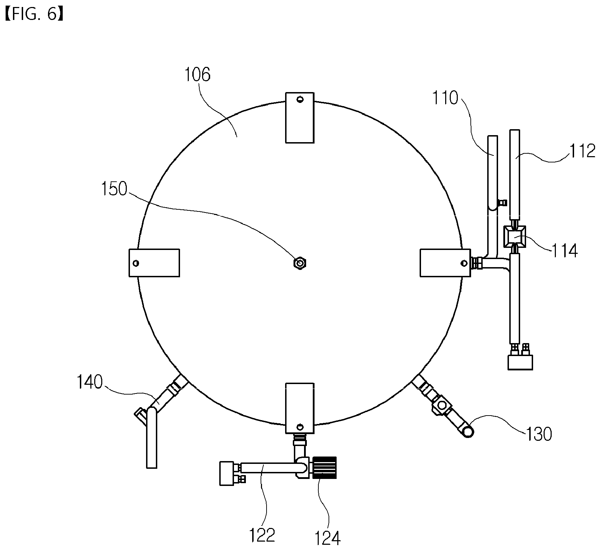

The drain hole 150 is a place to discharge the fluid when needs to discharge the fluid in the heat storage tank 100. In general, it is located on the lower cap 106 of the heat storage tank 100 for smooth fluid discharge. In one embodiment of the present invention shown in FIG. 6, the drain hole 150 is formed in the center of the lower cap 106. However, as described above, the position of the drain hole 150 may be moved to the side portion of the heat storage tank 100 rather than the lower portion of the heat storage tank 100 so that installation of the support 108 is not required.

The fuel cell heat exchanger 200 discharges the waste heat generated in the fuel cell itself by using system water. That is, heat exchange is performed between the coolant circulating inside the fuel cell and the system water supplied from the heat storage tank, so that the heat of the coolant is transferred to the system water, thereby cooling the inside of the fuel cell. The fuel cell heat exchanger 200 corresponds to a source of heat when viewed from the standpoint of a heat storage tank.

The heat exchanger 300 for hot water supply discharges heat to the outside through the circulation water for heat exchange that has absorbed the waste heat stored in the heat storage tank 100. At this time, the discharged heat may be supplied as hot water to a user by heating the external low-temperature water. Therefore, the heat exchanger 300 for hot water supply corresponds to a means for discharging heat when viewed from the standpoint of a heat storage tank.

Although not shown in the drawings of the present application, there are temperature sensors in all flow paths that exist in the entire system, and temperature sensors are installed at the top, middle, and bottom of the body part 104 of the heat storage tank 100, respectively. In addition, in the system water outlet pipe 112 near the heat storage tank 100, there is a circulation passage circulating to a radiator 402, and the system water discharged from the heat storage tank 100 circulates in the circulation passage and discharge the heat through the radiator 402. Accordingly, the temperature of the system water can be lowered to form the system water in a lower temperature state. That is, the radiator 402 corresponds to another heat dissipation source of the heat storage tank 100. Thereafter, the system water flows into the fuel cell heat exchanger 200 to exchange heat with the waste heat generated from the fuel cell, and then the system water that has been converted in a high temperature state by absorbing the waste heat is introduced into the upper portion of the heat storage tank 100. Therefore, the heat storage tank 100 is configured to maintain a thermal balance while radiating the heat supplied from multiple fuel cells through the heat exchanger 300 for hot water supply, the radiator 402, the hot water discharge pipe 130, and the like. In addition, a control means is additionally provided to control which heat source to receive heat from and through which heat dissipation means to dissipate heat. At this time, the priority between the heat dissipation means may be determined by comprehensively considering the operation efficiency of the fuel cell, the stability of the system, whether a user requests hot water supply, and the like.

FIG. 7 shows a schematic configuration of the fuel cell system. Referring to FIG. 7, the system water that has absorbed waste heat from each of the fuel cell heat exchangers 200 in a high temperature state flows into the upper portion of the heat storage tank 100 through the system water inlet pipe 110 integrated at one point. Although not shown in FIG. 7 for simplicity, the fluid supplied through the fluid supply pipe 140 is basically existed in the heat storage tank 100. The fluid existing in the heat storage tank 100 serves to store the waste heat from the fuel cell heat exchanger 200 by exchanging heat with the high-temperature system water.

After the heat is supplied from the heat exchanger 300 for hot water supply, the system water introduced in a low temperature state is introduced into the heat storage tank 100 and serves to lower the temperature of the lower portion of the heat storage tank 100. As the temperature of the lower portion of the heat storage tank 100 decreases, the fluid at the lower portion becomes a low temperature state, and eventually, the low-temperature system water is discharged through the system water outlet pipe 112 connected to the lower portion of the heat storage tank 100. The system water transfer pump 114 is provided to help discharge the system water. The system water is circulated to the fuel cell heat exchanger 200 and the heat storage tank 100 through the system water transfer pump 114. In addition, although not shown in the drawings of the present application, the radiator 402 is installed in the system water inlet pipe 110 near the heat storage tank 100 to make the incoming system water in a low temperature state.

The system water inlet pipe 110 is branched at any one point to supply low-temperature system water to each of the fuel cell heat exchangers 200.

Hereinafter, a control method for waste heat treatment will be described using one embodiment of the present invention.

At least one fuel cell is installed, and the fuel cell includes a fuel cell controller. The fuel cell is connected to the fuel cell heat exchanger 200 through a flow path, and the fuel cell heat exchanger 200 is connected to the system water outlet pipe 112 and the system water inlet pipe 110. A control valve is installed on the system water inlet pipe 110, and the control valve is opened and closed by receiving a signal from the fuel cell controller. The system water transfer pump 114 is installed on the system water outlet pipe 112, and a heat exchanger 400 for heat dissipation is installed on the system water outlet pipe 112. The heat exchanger 400 for heat dissipation and the radiator 402 are connected through a circulation water flow path for heat dissipation, and the heat exchanged by the heat exchanger 400 for heat dissipation is discharged to an outside through the radiator 402.

In addition, since the system water supplied to the fuel cell heat exchanger 200 functions as the coolant for lowering the temperature inside the fuel cell, the temperature of the system water supplied to the fuel cell should be as low as possible. Therefore, the heat exchanger 400 for heat dissipation is disposed in a stage immediately preceding the fuel cell heat exchanger 200 on the system water flow path, and the system water in a state in which the temperature is maintained as low as possible can be supplied to the fuel cell heat exchanger 200.

Through the heat storage tank 100 and the heat storage tank controller installed in the heat storage tank 100, the water level sensor and the system water inlet pipe 110 connected to the heat storage tank 100, the system water outlet pipe 112, the system water supply pipe for hot water 120, the system water recovery pipe 122 for hot water supply, the fluid supply pipe 140, and the hot water discharge pipe 130 and the control valves installed on the fluid supply pipe 140 and the hot water discharge pipe 130, the fluid may be introduced into the heat storage tank 100 or the fluid may be discharged from the heat storage tank 100. The control valve is opened and closed by receiving a signal from the heat storage tank controller.

Through the heat exchanger for hot water supply 300, the system water supply pipe for hot water 120 connected to the heat exchanger for hot water supply 300, the system water recovery pipe for hot water supply 122 and the system water circulation pump for hot water 124 installed on the system water recovery pipe for hot water supply 122, the temperature of the external low-temperature water may be increased, which will be described later.

Through a water channel that is installed so that external low-temperature water flows into the heat exchanger for hot water supply 300 and the external low-temperature water flows out of the heat exchanger for hot water supply 300 and a flow rate sensor 500 installed on the water channel, the waste heat in the heat storage tank 100 may be supplied in the heat exchanger 300 for hot water supply for circulation. Accordingly, the external low-temperature water can be heated, and the heated low-temperature water can be supplied to a user as hot water.

That is, if a user opens hot water to use hot water, the flow rate sensor 500 installed in the external low-temperature water flow path senses the flow rate in the water channel. The flow rate sensor 500 that has sensed the flow rate transmits a flow rate detection signal to the heat storage tank controller. If the temperature in the heat storage tank 100 detected by the temperature sensor installed in the heat storage tank 100 is higher than a certain temperature, the heat storage tank controller transmits an operation signal to the system water circulation pump for hot water 124. The certain temperature may change flexibly in some cases, and is not a fixed value. As the system water circulation pump for hot water 124 operates, the high-temperature circulation water stored in the heat storage tank is moved to the heat exchanger for hot water supply 400 through the system water supply pipe for hot water 120 and dissipates heat at the heat exchanger for hot water supply 300. Accordingly, the user can obtain the desired hot water. If the temperature in the heat storage tank is lower than the certain temperature, the heat storage tank controller does not transmit the operation signal to the system water circulation pump for hot water 124, so that the system water circulation pump for hot water 124 does not operate. This is generally a case in which the accumulation of the waste heat in the heat storage tank is not sufficient, so that the user can use the desired hot water by receiving heat supply through the use of an external auxiliary boiler or the like.

The process of absorbing waste heat in the fuel cell will be described. When the fuel cell is in operation, the fuel cell controller transmits a fuel cell operation signal to the heat storage tank controller. The heat storage tank controller that has received the operation signal transmits an operation signal to the system water transfer pump 114, and the system water transfer pump 114 operates accordingly. Here, the temperature in the fuel cell may be controlled by a control valve provided for each fuel cell heat exchanger 200. That is, when the control valve is opened, the system water of low temperature is supplied to the fuel cell heat exchanger 200 to cool the inside of the fuel cell.

If the temperature in the fuel cell is maintained within a normal range, the control valve is closed. In this case, since the system water is supplied only to the fuel cell with the control valve open, multiple fuel cells can be individually and independently cooled using one heat storage tank.

Hereinafter, a method of discharging the waste heat in the heat storage tank in which waste heat is accumulated above a certain level will be described.

In order for the fuel cell to operate efficiently, it is important to keep the system water at a low temperature. If the system water is maintained at a high temperature, the waste heat generated from the fuel cell cannot be efficiently absorbed, and the waste heat is accumulated in the fuel cell, thereby reducing the electricity generation efficiency of the fuel cell. In addition, it may cause failure of components in the fuel cell.

As one of the methods of discharging the waste heat in the heat storage tank, the embodiment of the present invention uses the radiator 402. If the temperature sensor installed at the lower portion of the heat storage tank detects a certain temperature or higher, the radiator 402 is operated through the heat storage tank controller. If the temperature at the lower portion of the heat storage tank falls below a certain temperature due to the operation of the radiator 402, the operation of the radiator 402 is stopped. Specifically, when the radiator 402 is operated, there is heat exchange between the system water outlet pipe 112 passing through the heat exchanger for heat dissipation 400 and the flow path connected to the radiator 402, and the flow path that has absorbed the heat in the system water outlet pipe 112 transports heat by the movement of the fluid in the flow path, thereby discharging the heat transported from the radiator 402 to the outside. The temperature of the fluid in the system water outlet pipe 112 may be reduced through the heat dissipation.

In some cases, the system water may be heated to an extent that exceeds the heat dissipation capacity of the radiator 402. In this case, high-temperature system water can be directly discharged to an outside without using a heat exchanger or the like. That is, if the temperature sensor installed at the lower portion of the heat storage tank 100 detects a certain temperature or higher, the control valve of the hot water discharge pipe 130 is opened through the heat storage tank controller, and accordingly, the high-temperature system water distributed at the upper portion of the heat storage tank 100 is discharged directly to the outside.

Thereafter, if the water level in the heat storage tank 100 falls below a certain level due to the discharge, and the water level sensor in the heat storage tank 100 detects this, the control valve of the fluid supply pipe 140 is opened through the heat storage tank controller, so that low-temperature water flows in and the water level will be filled. If the temperature in the heat storage tank 100 falls below a certain temperature during the above processes, the control valves of the hot water discharge pipe 130 and the fluid supply pipe 140 are closed through the heat storage tank controller.

When both the radiator 402 and the hot water discharging method are used depending on the situation, priority is set for the use of the radiator 402. If the radiator 402 operates as described above, but the radiator 402 is operated for more than a certain time set in the controller, the hot water discharging method is used as the operation of the heat storage tank controller. In this case, the hot water discharging method operates in the same manner as described above, and if the temperature in the heat storage tank falls below a certain temperature by the radiator 402 and the hot water discharging method, the radiator 402 and the hot water discharging method are stopped.

In addition, if the operation of the system water transfer pump 114 is also stopped in a state in which the fuel cell system is stopped, the temperature of the system water stored in the lower portion of the heat storage tank 100 may be lowered. In particular, there may be a risk of freezing and breaking depending on external temperature conditions. In this case, if it is determined by the heat storage tank controller that there is a risk of freezing, the two pumps 114 and 124 may be operated to prevent freezing. In other words, the system water is continuously circulated so that freezing can be prevented even if there is no heat source.

Thereafter, if the temperature of the system water rises, the external temperature condition changes, or the operation of the fuel cell is resumed, there is no fear of freezing, so the operation of the pump is stopped and the operation can be continued according to the operating conditions of the fuel cell system.

As described above, one embodiment of the present invention has been described, but those of ordinary skill in the relevant technical field can make various modification and changes to the present invention by including, changing, deleting, or adding components within the scope not departing from the spirit of the present invention described in the claims, and it will be said that this is also included within the scope of the present invention.

### [Industrial Applicability]

The present invention has industrial applicability for fuel cell systems.

## Claims

1. A fuel cell system comprising:
multiple fuel cells;
a fuel cell heat exchanger that is provided for each of the fuel cells, and exchanges heat between coolant cooling the fuel cell and system water;
a heat storage tank that stores the system water;
a heat exchanger for hot water supply that supplies heat of the system water in the heat storage tank to low-temperature water introduced from an outside; and
a heat exchanger for heat dissipation that is disposed between the heat storage tank and any one of the fuel cell heat exchangers,
wherein the heat generated in the fuel cell is supplied to the system water, and
the heat supplied to the system water is selectively transferred to the low-temperature water through the heat exchanger for hot water supply or radiated to an outside through the heat exchanger for heat dissipation.

2. The fuel cell system according to claim 1, further comprising a control valve that is disposed between each of the fuel cell heat exchangers and the heat storage tank, and controls the supply of the system water to the fuel cell heat exchanger, wherein the control valve selectively supplies the system water to the fuel cell heat exchanger depending on a temperature of the fuel cell.

3. The fuel cell system according to claim 1, wherein the system water recovered from the fuel cell heat exchanger flows into an upper portion of the heat storage tank.

4. The fuel cell system according to claim 1, wherein if there is a request for hot water supply from a user, the system water is supplied to the heat exchanger for hot water supply in preference to the heat exchanger for heat dissipation.

5. The fuel cell system according to claim 1, wherein the system water supplied to the heat exchanger for heat dissipation is discharged from a lower portion of the heat storage tank.

6. The fuel cell system according to claim 1, wherein the heat exchanger for heat dissipation is fluidly connected to a radiator for dissipating heat into an atmosphere.

7. The fuel cell system according to claim 1, wherein a hot water discharge pipe for discharging the system water in the heat storage tank is provided on an upper portion of the heat storage tank.

8. The fuel cell system according to claim 7, wherein a control valve is provided in the hot water discharge pipe, and the hot water discharge pipe is controlled to be opened if a temperature of the system water in the heat storage tank is higher than a set temperature.

9. The fuel cell system according to claim 1, wherein a fluid supply pipe for replenishing the system water is provided at a lower portion of the heat storage tank.

10. The fuel cell system according to claim 1, wherein the low-temperature water heated by the heat exchanger for hot water supply is supplied to a user as hot water.

11. The fuel cell system according to claim 1, wherein the heat exchanger for heat dissipation is disposed immediately preceding the fuel cell heat exchanger based on a flow direction of the system water.

12. The fuel cell system according to claim 1, further comprising a pump for circulating the system water, wherein the pump operates and circulates the system water if a temperature of the system water in the heat storage tank falls below a set minimum temperature in a state in which an operation of the fuel cell is stopped.
